# EUROPÄISCHE PATENTSCHRIFT

(11) **EP 3 681 760 B1**
(45) Veröffentlichungstag und Bekanntmachung des Hinweises auf die Patenterteilung: **18.08.2021**
(21) Anmeldenummer: 18728589.5
(22) Anmeldetag: 28.05.2018
(51) Int. Cl.: B60Q 1/26, B60Q 1/04

(54) **ANORDNUNG ZUR BEFESTIGUNG EINER LICHTTECHNISCHEN EINRICHTUNG AN EINEM FAHRZEUG SOWIE FAHRZEUG MIT EINER DERARTIGEN BEFESTIGUNGSANORDNUNG**
ASSEMBLY FOR SECURING A LIGHTING DEVICE ON A VEHICLE, AND VEHICLE HAVING A SECURING ASSEMBLY OF THIS TYPE
ENSEMBLE PERMETTANT DE FIXER UN DISPOSITIF D'ÉCLAIRAGE SUR UN VÉHICULE ET VÉHICULE ÉQUIPÉ D'UN TEL ENSEMBLE DE FIXATION

(30) Priorität: 13.09.2017 DE 102017216148
(43) Veröffentlichungstag der Anmeldung: 22.07.2020
(73) Patentinhaber: Volkswagen Aktiengesellschaft, 38440 Wolfsburg (DE)
(72) Erfinder: HERDT, Alexej, 38518 Gifhorn (DE)
(86) Internationale Anmeldenummer: PCT/EP2018/063968
(87) Internationale Veröffentlichungsnummer: WO 2019/052697

(56) Entgegenhaltungen:
- DE-A1- 2 452 337
- DE-A1-102013 009 311
- FR-A1- 3 017 084
- JP-A- H02 127 138
- US-A- 2 804 539

## Beschreibung

Die Erfindung betrifft eine Befestigungsanordnung nach dem Oberbegriff des Patentanspruchs 1 der Erfindung. Gemäß Anspruch 9 der Erfindung betrifft dieselbe ferner ein Fahrzeug mit einer derartigen Befestigungsanordnung.

Allgemein bekannt ist es, in Karosserieteilen von Fahrzeugen Montageöffnungen zur Aufnahme von lichttechnischen Einrichtungen vorzusehen und letztere am Karosserieteil fest zu installieren. In der Praxis hat es sich jedoch ergeben, dass allein schon bei einem leichten Crashereignis, wie einem Parkrempler, besagte lichttechnische Einrichtung Schaden nehmen kann, welches dann zu oft nicht unerheblichen Kosten führt. Darüber hinaus ist es aus der DE 10 2012 025 372 A1 bekannt, eine Abdeckklappe für eine Karosserieöffnung eines Kraftfahrzeugs im Hinblick auf den Fußgängerschutz derart zu verbessern, dass eine energieverzehrende bzw. kraftaufnehmende Verlagerung der Abdeckklappe in Richtung der einwirkenden Aufprallkraft ermöglicht ist.

Die JP H02 127138 A offenbart eine lichttechnische Einrichtung, vorliegend in Form einer Lampe bzw. Leuchte, welche gegen ein Karosserieteil eines Fahrzeugs mittels Federkraft vorgespannt ist und zur Vermeidung einer Beschädigung der lichttechnischen Einrichtung im Falle einer Kollision rückverlagerbar ist.

Der vorbeschriebenen Lösung zur Lagerung einer lichttechnischen Einrichtung an einem Karosserieteil eines Fahrzeugs vergleichbare Lösungen sind ferner aus der US 2 804 539 A und der DE 10 2013 0099 311 A1 bekannt.

Die FR 3 017 084 A1 beschreibt eine lichttechnische Einrichtung eines Fahrzeugs, welche mittels einer Blechplatte am Karosserieteil festgelegt ist. Die Blechplatte weist hierzu Laschen auf, welche sich infolge eines Anstoßes elastisch verformen können und so eine Rückverlagerung der lichttechnischen Einrichtung ermöglichen.

All den vorgenannten lichttechnischen Einrichtungen ist gemein, dass diese respektive deren Licht- bzw. Streuscheibe dem Karosserieteil vorsteht und eine etwaige Anstoßkraft unmittelbar auf besagte Licht- bzw.- Streuscheibe trifft, wodurch zumindest geringfügige Beschädigungen derselben nicht auszuschließen sind.

Um diesem Umstand zu begegnen, ist aus der gattungsbildenden DE 24 52 337 A1 eine lichttechnische Einrichtung eines Fahrzeugs mit einem Leuchtenkörper bekannt, welcher innerhalb einer Öffnung eines Endteils des Fahrzeugs rückverlagerbar an einem Träger einer Aufbaustruktur des Fahrzeugs gelagert ist. Das Endteil ist als ein aus einem Schaumstoff bestehendes nachgiebiges Element ausgebildet. In einer Normalstellung ist der Leuchtenkörper gegenüber einer Vorderkante des Endteils zurückversetzt angeordnet, jedoch mittels formsteifer Stoßaufnahmeglieder im Bereich besagter Vorderkante gegen das Endteil abgestützt, d. h., die Stoßaufnahmeglieder reichen über die Vorderkante der Streuscheibe des Leuchtenkörpers hinaus. Wirkt auf das Endteil eine Stoßkraft im Bereich des Leuchtenkörpers ein, so wird diese an den Stoßaufnahmegliedern eingeleitet und bewirkt die Rückverlagerung des Leuchtenkörpers. Der Leuchtenkörper ist hierzu mittels energievernichtender, verformbarer Längsstege am Träger der Aufbaustruktur des Fahrzeugs abgestützt.

Hiervon ausgehend ist es Aufgabe der Erfindung, eine Anordnung zur Befestigung einer lichttechnischen Einrichtung an einem Karosserieteil eines Fahrzeugs, insbesondere Kraftfahrzeugs, zu schaffen, welche bei einem leichten Crashereignis, wie einem Parkrempler, eine Beschädigung der lichttechnischen Einrichtung verhindert, zumindest jedoch wirkungsvoll mindert. Ferner ist es Aufgabe der Erfindung, ein Fahrzeug mit einer derartigen Befestigungsanordnung zur Verfügung zu stellen.

Ausgehend von einer Befestigungsanordnung mit einer lichttechnischen Einrichtung, mit einem Karosserieteil eines Fahrzeugs und mit einem Montagerahmen, wobei besagte lichttechnische Einrichtung in dem Montagerahmen angeordnet und gehaltert ist, wird die gestellte Aufgabe dadurch gelöst, dass der Montagerahmen seinerseits innerhalb einer Montageöffnung des Karosserieteils angeordnet und zumindest in axialer Richtung der Montageöffnung verlagerbar am Karosserieteil gelagert ist, dass der Montagerahmen einen Vorsprung ausbildet, welcher eine Stirnfläche der lichttechnischen Einrichtung sowie das Karosserieteil nach Fahrzeug-außen hin überragt, und dass der Montagerahmen samt lichttechnischer Einrichtung im Falle eines Crashereignisses, bei dem ein Anstoßkörper den Vorsprung kontaktiert, vom Karosserieteil entkoppelt zumindest in axialer Richtung der Montageöffnung verlagerbar ist.

Hierdurch ist die Möglichkeit geschaffen, dass der Montagerahmen samt lichttechnischer Einrichtung infolge eines Anstoßes zumindest in bestimmten Grenzen in axialer Richtung der Montageöffnung ausweichen kann und so die eingeleitete Anstoßkraft nicht oder nicht vollständig vom Montagerahmen samt lichttechnischer Einrichtung aufgenommen wird mit der Folge, dass eine Beschädigung zumindest der oft kostenintensiven lichttechnischen Einrichtung verhindert, zumindest jedoch wirkungsvoll minimiert ist. Es ist demnach verhindert, zumindest jedoch die Gefahr wirkungsvoll gemindert, dass ein anstoßender Körper die lichttechnische Einrichtung unmittelbar kontaktiert. Der mit dem Vorsprung ausgebildete und vom Karosserieteil entkoppelte Montagerahmen fungiert sozusagen als Anschiebblende.

Die Unteransprüche beschreiben bevorzugte Weiterbildungen oder Ausgestaltungen der Erfindung.

Danach ist vorgesehen, dass der Montagerahmen samt lichttechnischer Einrichtung elastisch am Karosserieteil gelagert ist. Durch die elastische Lagerung des Montagerahmens wird dieser nach besagtem Anstoß und anstoßkraftabsorbierender Verlagerung desselben selbsttätig in seine Ausgangsstellung zurückgeführt.

Um die Gefahr der besagten unmittelbaren Kontaktierung der lichttechnischen Einrichtung durch einen anstoßenden Körper besonders wirkungsvoll zu minimieren, ist bevorzugt vorgesehen, dass zumindest der Vorsprung des Montagerahmens umlaufend um die lichttechnische Einrichtung ausgebildet ist.

Wie die Erfindung weiter vorsieht, ist die elastische Lagerung des Montagerahmens am Karosserieteil mittels zumindest eines Federelementes und/oder eines Elastomers bewirkt. Als Federelement kann jedwedes an sich bekannte geeignete Federelement zur Anwendung kommen, wie beispielsweise eine Schraubendruckfeder, welche relative große Hübe erlaubt.

Bevorzugt ist das zumindest eine Federelement und/oder Elastomer in einer in axialer Richtung der Montageöffnung im Karosserieteil ausgebildeten Nut angeordnet. Hierdurch ist eine besonders einfache Halterung des zumindest einen Federelements und/oder Elastomers bewirkt.

Weiter bevorzugt ist besagte Nut als Verschiebeführung für einen mit derselben korrespondierenden Führungssteg des Montagerahmens ausgestaltet. Hierdurch ist vorteilhaft eine Zwangsführung sowohl des Federelements bzw. Elastomers als auch des Montagerahmens bewirkt.

Gemäß einer vorteilhaften Ausführungsvariante der Erfindung ist das die lichttechnische Einrichtung aufweisende Karosserieteil durch eine Stoßfängerabdeckung des Fahrzeugs gebildet.

Was die lichttechnische Einrichtung an sich anbelangt, ist diese durch zumindest einen passiven Rückstrahler, wie beispielsweise einen Reflektor oder ein Katzenauge und/oder durch eine aktive Leuchteinrichtung, wie beispielsweise eine Heckleuchte, einen Rückfahrscheinwerfer, ein Tagfahrlicht, eine Bremsleuchte und/oder eine Blinkleuchte gebildet.

Die Erfindung betrifft auch ein Fahrzeug, mit einer Befestigungsanordnung der vorstehend beschriebenen Art.

Nachstehend wird die Erfindung anhand eines in den Zeichnungen schematisch dargestellten Ausführungsbeispiels näher erläutert. Sie ist jedoch nicht auf dieses beschränkt, sondern erfasst alle durch die Patentansprüche definierten Ausgestaltungen. Für die Zwecke der vorliegenden Beschreibung soll die übliche Fahrtrichtung eines Kraftfahrzeugs mit "-x" ("minus x"), die Richtung entgegen seiner üblichen Fahrtrichtung mit "+x" ("plus x"), ausgehend von der üblichen Fahrtrichtung (-x) die Richtung in der Horizontalen quer zur x-Richtung nach rechts gesehen mit "+y", ausgehend von der üblichen Fahrtrichtung (-x) die Richtung in der Horizontalen quer zur x-Richtung nach links gesehen mit"-y", die Richtung in der Vertikalen quer zur x-Richtung nach oben gesehen mit "+z", und die Richtung in der Vertikalen quer zur x-Richtung nach unten gesehen mit "-z" bezeichnet werden. Diese Bezeichnungsweise der Raumrichtungen in kartesischen Koordinaten entspricht dem in der Kraftfahrzeugindustrie allgemein verwendeten Koordinatensystem. Überdies werden Begriffe wie "vorne", "hinten", "oben" "unten" sowie Begriffe mit ähnlichem Bedeutungsinhalt einschließlich der Begriffe "rechts" und "links" in der Weise verwendet, wie sie zur Richtungsbezeichnung an einem Kraftfahrzeug üblicherweise gebraucht werden. Es zeigen:
- Fig. 1: eine Rückansicht eines Kraftfahrzeugs mit lichttechnischen Einrichtungen,
- Fig. 2: eine Schnittdarstellung einer gattungsgemäßen Befestigungsanordnung nach dem Stand der Technik,
- Fig. 3a: eine Schnittdarstellung einer erfindungsgemäßen Befestigungsanordnung der gattungsgemäßen Art mit einer lichttechnischen Einrichtung in ihrer bestimmungsgemäßen Ausgangsstellung unmittelbar vor einem Anstoß, und
- Fig. 3b: die erfindungsgemäße Befestigungsanordnung nach Fig. 3a zu einem fortgeschrittenen Zeitpunkt des besagten Anstoßes.

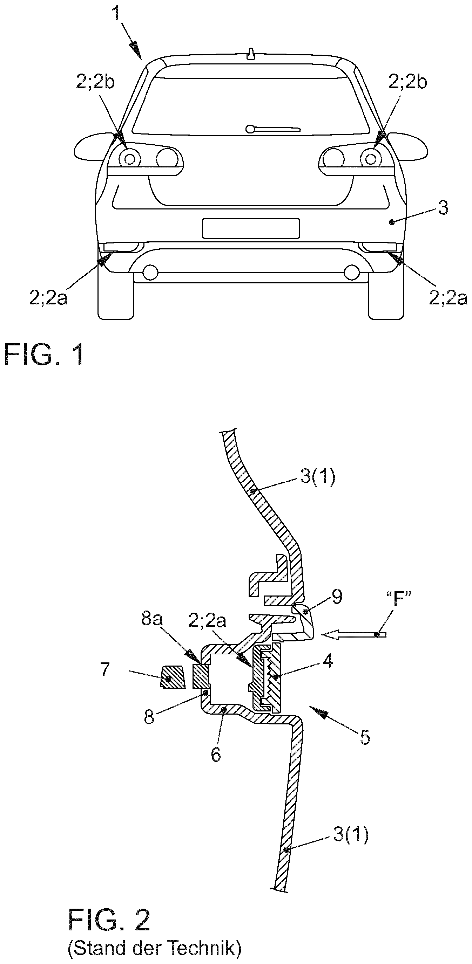

Fig. 1 zeigt zunächst die Rückansicht eines Fahrzeugs 1, vorliegend eines Kraftfahrzeugs, mit mehreren an sich bekannten lichttechnischen Einrichtungen 2, die an einem zugeordneten Karosserieteil 3 des Fahrzeugs 1 angeordnet und befestigt sind. Die lichttechnischen Einrichtungen 2 sind vorliegend durch passive Rückstrahler 2a, wie beispielsweise einen Reflektor oder ein Katzenauge und durch aktive bzw. aktiv betriebene Leuchteinrichtungen 2b, wie beispielsweise eine Heckleuchte, einen Rückfahrscheinwerfer, ein Tagfahrlicht, eine Bremsleuchte und/oder eine Blinkleuchte gebildet.

Nach dem Stand der Technik sind gemäß den Fig. 1 und 2 an einem Karosserieteil 3 in Form einer Stoßfängerabdeckung lichttechnische Einrichtungen 2 in Form passiver Rückstrahler 2a vorgesehen. Unter einem passiven Rückstrahler 2a wird eine lichttechnische Einrichtung 2 verstanden, bei der von außen auftreffendes Licht an einer Luft-Scheiben-Grenzfläche 4 des Rückstrahlers 2a in die entgegengesetzte Richtung reflektiert wird. Der Rückstrahler 2a ist innerhalb einer Montageöffnung 5 des Karosserieteils 3 respektive der Stoßfängerabdeckung angeordnet. Die Montageöffnung 5 ist vorliegend durch eine Einbuchtung 6 des Karosserieteils 3 gebildet. Der Rückstrahler 2a weist einen Anbindungssteg 7 zur Befestigung desselben an einem Bodenabschnitt 8 der Einbuchtung 6 auf. Gemäß diesem Ausführungsbeispiel ist die Befestigung des Rückstrahlers 2a durch Formschluss bewirkt, indem der vorliegend stabförmig ausgebildete Anbindungssteg 7 nicht zeichnerisch dargestellte Rastmittel aufweist und unter Zuhilfenahme derselben in eine Öffnung 8a des besagten Bodenabschnitts 8 eingeclipst ist.

Dem Rückstrahler 2a ist zwar eine separate, am Karosserieteil 3 befestigte Blende 9 zugeordnet, welche nach Fahrzeug-außen respektive Fahrzeug-hinten hin den Rückstrahler 2a überragt, jedoch ist hierdurch die Gefahr der Beschädigung des Rückstrahlers 2a infolge eines Crashereignisses, wie eines Parkremplers nicht ausgeschlossen, da etwaige auf die Blende 9 einwirkende Kräfte "F" unmittelbar in den Bereich des Karosserieteils 3 übertragen werden, der besagte, den Rückstrahler 2a tragende Einbuchtung 6 ausbildet. Hierdurch sind ggf. Verspannungen und Verdrillungen der lichttechnischen Einrichtung 2, vorliegend in Form des Rückstrahlers 2a zu verzeichnen, die wiederum zu Beschädigungen desselben führen können.

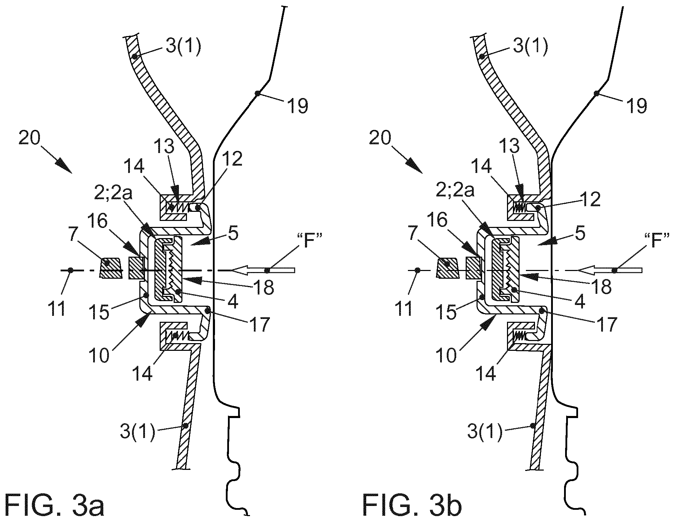

Gemäß den Fig. 3a und 3b unterscheidet sich die erfindungsgemäße Befestigungsanordnung 20 zum vorbeschriebenen Stand der Technik im Wesentlichen dadurch, dass die lichttechnische Einrichtung 2, vorliegend in Form des Rückstrahlers 2a, sozusagen vom Karosserieteil 3 entkoppelt ist, indem die lichttechnische Einrichtung 2 in Form des Rückstrahlers 2a in einem separaten Montagerahmen 10 angeordnet und gehaltert ist. Der Montagerahmen 10 samt lichttechnischer Einrichtung 2 ist innerhalb der Montageöffnung 5 des Karosserieteils 3 angeordnet und zumindest in axialer Richtung der Montageöffnung 5 verlagerbar am Karosserieteil 3 gelagert. Unter axialer Richtung der Montageöffnung 5 wird insoweit die Richtung verstanden, die durch den Verlauf der Mittenlängsachse 11 der Montageöffnung 5 gekennzeichnet ist. Gemäß diesem Ausführungsbeispiel verläuft besagte Mittenlängsachse 11 in oder nahezu in Fahrzeuglängsrichtung (x-Richtung).

Der Montagerahmen 10 ist gemäß diesem Ausführungsbeispiel topf- bzw. hutförmig ausgebildet und verfügt randseitig über zumindest einen, bevorzugt einen umlaufenden Führungssteg 12, welcher in axialer Richtung der Montageöffnung 5 bzw. des Montagerahmens 9 gesehen in eine korrespondierende Führungs-Nut 13 des Karosserieteils 3 eingreift. Die besagte Führungs-Nut 13 umschließt somit die Montageöffnung 5 und fungiert so als Verschiebeführung zur Zwangsführung des Montagerahmens 10 in der besagten axialen Richtung der Montageöffnung 5.

Unter Vermittlung von innerhalb der besagten Nut 13 angeordneter Federelemente 14 stützt sich der Montagerahmen 10 in axialer Richtung der Montageöffnung 5 am Karosserieteil 3 elastisch ab. Der Montagerahmen 10 weist einen Boden 15 mit einer Öffnung 16 auf, in welcher in Anlehnung an den Stand der Technik die lichttechnische Einrichtung 2 in Form des Rückstrahlers 2a mit dem vorliegend stabförmig ausgebildeten Anbindungssteg 7 formschlüssig befestigt, insbesondere eingeclipst ist.

Lediglich beispielgebend sind die Federelemente 14 durch je eine Schraubendruckfeder gebildet. Alternativ können die Federelemente 14 beispielsweise auch durch zumindest eine Blattfeder oder ein Federpaket aus denselben gebildet sein. Ferner können die Federelemente 14 oder einzelne derselben durch ein Elastomer, beispielsweise durch einen elastomeren Kunststoff, insbesondere Kunststoffschaum ersetzt sein (nicht zeichnerisch dargestellt).

Wie den Fig. 3a und 3b noch zu entnehmen ist, weist der Montagerahmen 10 einen als Blende fungierenden Vorsprung 17 auf, welcher die Stirnfläche 18 der lichttechnischen Einrichtung 2 nach Fahrzeug-außen, gemäß diesem Ausführungsbeispiel nach Fahrzeug-hinten hin überragt. Ferner ist gemäß diesem Ausführungsbeispiel der besagte Vorsprung 17 umlaufend um die lichttechnische Einrichtung 2 ausgebildet. Der Vorsprung 17 verbindet dabei den topf- bzw. hutförmig ausgebildeten Montagerahmen 10 mit seinem vorliegend umlaufenden Führungssteg 12.

Unter Bezugnahme auf die Fig. 3a und 3b ergibt sich die Funktionsweise der Erfindung wie folgt:
Gesetzt den Fall, im Rahmen eines Crashereignisses, wie beispielsweise eines Parkremplers, trifft ein Anstoßkörper 19, welcher beispielsweise ein anderes Fahrzeug, ein Einkaufskorb, ein Einkaufswagen oder dgl. mehr sein kann, mit relativ geringer Anstoßkraft "F" auf die Heckpartie des Fahrzeugs 1 im Bereich der besagten lichttechnischen Einrichtung 2, so wird zunächst der als Blende fungierende Vorsprung 17 des Montagerahmens 10 vom Anstoßkörper 19 kontaktiert (vgl. Fig. 3a). Zu einem fortgeschrittenen Zeitpunkt des besagten Crashereignisses wird der Montagerahmen 10 samt lichttechnischer Einrichtung 2 in Kraftrichtung, d.h., gemäß diesem Ausführungsbeispiel nach Fahrzeug-vorn (-x-Richtung) gegen die aufgebrachte Federkraft der Federelemente 14 und unter Absorption von Anstoßenergie verlagert (vgl. Fig. 3b). Wird die Anstoßkontaktierung aufgehoben, wird der Montagerahmen 10 samt lichttechnischer Einrichtung 2 durch Federkraft wieder in seine ursprüngliche Stellung bzw. Ausgangsstellung zurückgeführt.

### Bezugszeichenliste

- 1: Fahrzeug
- 2: lichttechnische Einrichtung
- 2a: passiver Rückstrahler
- 2b: aktive Leuchteinrichtung
- 3: Karosserieteil
- 4: Luft-Scheiben-Grenzfläche
- 5: Montageöffnung
- 6: Einbuchtung
- 7: Anbindungssteg
- 8: Bodenabschnitt
- 8a: Öffnung
- 9: Blende
- 10: Montagerahmen
- 11: Mittenlängsachse (Montageöffnung 5)
- 12: Führungssteg
- 13: Nut
- 14: Federelement
- 15: Boden
- 16: Öffnung
- 17: Vorsprung
- 18: Stirnfläche (lichttechnische Einrichtung 2)
- 19: Anstoßkörper
- 20: Befestigungsanordnung

## Patentansprüche

1. Befestigungsanordnung (20), mit einer lichttechnischen Einrichtung (2), mit einem Karosserieteil (3) eines Fahrzeugs (1), und mit einem Montagerahmen (10), wobei besagte lichttechnische Einrichtung (2) in dem Montagerahmen (10) angeordnet und gehaltert ist, **dadurch gekennzeichnet, dass** der Montagerahmen (10) seinerseits innerhalb einer Montageöffnung (5) des Karosserieteils (3) angeordnet und zumindest in axialer Richtung der Montageöffnung (5) verlagerbar am Karosserieteil (3) gelagert ist, dass der Montagerahmen (10) einen Vorsprung (17) ausbildet, welcher eine Stirnfläche (18) der lichttechnischen Einrichtung (2) sowie das Karosserieteil (3) nach Fahrzeug-außen hin überragt, und dass der Montagerahmen (10) samt lichttechnischer Einrichtung (2) im Falle eines Crashereignisses, bei dem ein Anstoßkörper (19) den Vorsprung (17) kontaktiert, vom Karosserieteil (3) entkoppelt zumindest in axialer Richtung der Montageöffnung (5) verlagerbar ist.

2. Befestigungsanordnung (20) nach Anspruch 1, **dadurch gekennzeichnet, dass** der Montagerahmen (10) samt lichttechnischer Einrichtung (2) elastisch am Karosserieteil (3) gelagert ist.

3. Befestigungsanordnung (20) nach Anspruch 1 oder 2, **dadurch gekennzeichnet, dass** zumindest der Vorsprung (17) des Montagerahmens (10) umlaufend um die lichttechnische Einrichtung (2) ausgebildet ist.

4. Befestigungsanordnung (20) nach Anspruch 2 oder 3, **dadurch gekennzeichnet, dass** die elastische Lagerung des Montagerahmens (10) am Karosserieteil (3) mittels zumindest eines Federelementes (14) und/oder eines Elastomers bewirkt ist.

5. Befestigungsanordnung (20) nach Anspruch 4, **dadurch gekennzeichnet, dass** das zumindest eine Federelement (14) und/oder Elastomer in einer in axialer Richtung der Montageöffnung (5) im Karosserieteil (3) ausgebildeten Nut (13) angeordnet ist.

6. Befestigungsanordnung (20) nach Anspruch 5, **dadurch gekennzeichnet, dass** die Nut (13) als Verschiebeführung für einen mit derselben korrespondierenden Führungssteg (12) des Montagerahmens (10) ausgestaltet ist.

7. Befestigungsanordnung (20) nach einem der Ansprüche 1 bis 6, **dadurch gekennzeichnet, dass** das Karosserieteil (3) durch eine Stoßfängerabdeckung des Fahrzeugs (1) gebildet ist.

8. Befestigungsanordnung (20) nach einem der Ansprüche 1 bis 7, **dadurch gekennzeichnet, dass** die lichttechnische Einrichtung (2) durch zumindest einen passiven Rückstrahler (2a), wie beispielsweise einen Reflektor oder ein Katzenauge und/oder durch eine aktive Leuchteinrichtung (2b), wie beispielsweise eine Heckleuchte, einen Rückfahrscheinwerfer, ein Tagfahrlicht, eine Bremsleuchte und/oder eine Blinkleuchte gebildet ist.

9. Fahrzeug (1), mit einer Befestigungsanordnung (20) nach einem der Ansprüche 1 bis 8.

## Claims

1. Securing assembly (20) having a lighting device (2), having a body part (3) of a vehicle (1), and having a mounting frame (10), wherein said lighting device (2) is arranged and held in the mounting frame (10), **characterized in that** the mounting frame (10) in turn is arranged within a mounting opening (5) of the body part (3) and is mounted on the body part (3) so as to be displaceable at least in the axial direction of the mounting opening (5), **that** the mounting frame (10) forms a projection (17) which projects beyond a front face (18) of the lighting device (2) and the body part (3) towards the outside of the vehicle, and **that** the mounting frame (10), together with the lighting device (2), can, in the case of a crash event in which an impacting body (19) contacts the projection (17), be displaced so as to be decoupled from the body part (3) at least in the axial direction of the mounting opening (5).

2. Securing assembly (20) according to claim 1, **characterized in that** the mounting frame (10) together with the lighting device (2) is mounted elastically on the body part (3).

3. Securing assembly (20) according to claim 1 or 2, **characterized in that** at least the projection (17) of the mounting frame (10) is formed circumferentially around the lighting device (2).

4. Securing assembly (20) according to claim 2 or 3, **characterized in that** the elastic mounting of the mounting frame (10) on the body part (3) is effected by means of at least one spring element (14) and/or an elastomer.

5. Securing assembly (20) according to claim 4, **characterized in that** the at least one spring element (14) and/or elastomer is arranged in a groove (13) formed in the axial direction of the mounting opening (5) in the body part (3).

6. Securing assembly (20) according to claim 5, **characterized in that** the groove (13) is designed as a displacement guide for a guide bar (12) corresponding thereto of the mounting frame (10).

7. Securing assembly (20) according to one of claims 1 through 6, **characterized in that** the body part (3) is formed by a bumper cover of the vehicle (1).

8. Securing assembly (20) according to one of claims 1 through 7, **characterized in that** the lighting device (2) is formed by at least one, passive, retro-reflecting device (2a), such as, for example, a reflector or a cat's eye, and/or by an active lighting device (2b), such as, for example, a rear light, a reverse light, a daytime running light, a brake light, and/or a blinker light.

9. Vehicle (1), having a securing assembly (20) according to one of claims 1 through 8.

## Revendications

1. Ensemble de fixation (20), comprenant un dispositif d'éclairage (2), comprenant une partie de carrosserie (3) d'un véhicule (1) et un cadre de montage (10), dans lequel ledit dispositif d'éclairage (2) est disposé et maintenu dans le cadre de montage (10), **caractérisé en ce que** le cadre de montage (10) est disposé pour sa part à l'intérieur d'une ouverture de montage (5) de la partie de carrosserie (3) et est logé déplaçable au moins dans la direction axiale de l'ouverture de montage (5) sur la partie de carrosserie (3), **en ce que** le cadre de montage (10) forme une saillie (17), qui fait saillie depuis une face avant (18) du dispositif d'éclairage (2) ainsi que de la partie de carrosserie (3) vers l'extérieur du véhicule et **en ce que** le cadre de montage (10) avec l'ensemble du dispositif d'éclairage (2), dans le cas d'un événement de collision pendant lequel un corps de butée (19) entre en contact avec la saillie (17), est déplaçable découplé de la partie de carrosserie (3) au moins dans la direction radiale de l'ouverture de montage (5).

2. Ensemble de fixation (20) selon la revendication 1, **caractérisé en ce que** le cadre de montage (10) avec le dispositif d'éclairage (2) est logé de façon élastique sur la partie de carrosserie (3).

3. Ensemble de fixation (20) selon la revendication 1 ou 2, **caractérisé en ce qu'**au moins la saillie (17) du cadre de montage (10) est conçue de manière circonférentielle autour du dispositif d'éclairage (2).

4. Ensemble de fixation (20) selon la revendication 2 ou 3, **caractérisé en ce que** le logement élastique du cadre de montage (10) sur la partie de carrosserie (3) est effectué au moyen d'au moins un élément de ressort (14) et/ou d'un élastomère.

5. Ensemble de fixation (20) selon la revendication 4, **caractérisé en ce que** l'au moins un élément de ressort (14) et/ou élastomère est disposé dans une rainure (13) formée dans la direction axiale de l'ouverture de montage (5) dans la partie de carrosserie (3).

6. Ensemble de fixation (20) selon la revendication 5, **caractérisé en ce que** la rainure (13) est conçue comme un guide de déplacement pour une nervure de guidage (12) du cadre de montage (10) correspondant à celle-ci.

7. Ensemble de fixation (20) selon l'une quelconque des revendications 1 à 6, **caractérisé en ce que** la partie de carrosserie (3) est formée par un revêtement de pare-chocs du véhicule (1).

8. Ensemble de fixation (20) selon l'une quelconque des revendications 1 à 7, **caractérisé en ce que** le dispositif d'éclairage (2) est formé par au moins un catadioptre passif (2a), par exemple un réflecteur ou un œil de chat et/ou par un dispositif de lampe actif (2b), par exemple un feu arrière, un phare de recul, un feu de jour, un feu de freinage et/ou un clignotant.

9. Véhicule (1) comprenant un ensemble de fixation (20) selon l'une quelconque des revendications 1 à 8.
